(19) **Europäisches Patentamt**
**European Patent Office**
**Office européen des brevets**

(11) **EP 3 134 622 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(21) Anmeldenummer: **15710495.1**

(22) Anmeldetag: **18.03.2015**

(51) Int Cl.:
*F01N 3/021* *(2006.01)*    *F01N 3/022* *(2006.01)*
*F01N 3/023* *(2006.01)*    *F01N 3/035* *(2006.01)*
*F01N 3/20* *(2006.01)*    *F01N 3/28* *(2006.01)*
*F01N 13/00* *(2010.01)*

(86) Internationale Anmeldenummer:
**PCT/EP2015/055599**

(87) Internationale Veröffentlichungsnummer:
**WO 2015/161960 (29.10.2015 Gazette 2015/43)**

(54) **BAUKASTENSYSTEM FÜR DIE BAUGRUPPE, UND VERFAHREN ZUR HERSTELLUNG DER BAUGRUPPE**

MODEL KIT AND METHOD OF PRODUCTION FOR A CATALYST ASSEMBLY

SYSTEME MODULAIRE DE CONSTRUCTION ET METHODE DE PRODUCTION POUR UN MODULE DE CATALYSATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2014 DE 102014207530**

(43) Veröffentlichungstag der Anmeldung:
**01.03.2017 Patentblatt 2017/09**

(73) Patentinhaber: **Bayerische Motoren Werke Aktiengesellschaft**
**80809 München (DE)**

(72) Erfinder: **BRUENE, Hans-Juergen**
**A-3350 Stadt Haag (AT)**

(56) Entgegenhaltungen:
**EP-A1- 2 419 610        DE-A1-102011 079 785**
**US-A1- 2011 138 776**

**Beschreibung**

Die Erfindung betrifft ein Baukastensystem für eine Katalysatorbaugruppe, die für eine Vorrichtung zur Reinigung von Abgasen eines Verbrennungsmotors vorgesehen ist, insbesondere eines Dieselmotors, wobei die Katalysatorbaugruppe einen regenerierbaren Partikelfilter und einen auf dem Partikelfilter integrierten Katalysator für die selektive Reduktion von Stickoxiden (SCRF-Katalysator) umfasst. Gegenstand der Erfindung ist ferner ein Verfahren zur Herstellung der Katalysatorbaugruppe.

Zur Reinigung der Abgase moderner Kraftfahrzeuge, insbesondere von Dieselfahrzeugen, werden üblicherweise Katalysatoranordnungen aus einer Kombination von Oxidationskatalysator oder NOx-Speicherkatalysator und Partikelfilter verwendet. Die motornah angeordneten Oxidationskatalysatoren und Partikelfilter werden in der Regel in einem gemeinsamen Gehäuse verbaut. Zur Einhaltung strengerer Abgasgrenzwerte kann der Oxidationskatalysator im selben Bauraum durch einen NOx-Speicherkatalysator ersetzt werden.

Im Oxidationskatalysator werden Kohlenmonoxid und flüchtige Kohlenwasserstoffe zu Kohlendioxid oxidiert. Der Oxidationskatalysator besteht üblicherweise aus einem metallischen oder keramischen Trägersubstrat mit einer katalytisch aktiven Beschichtung aus Metallen der Platingruppe wie Platin und/oder Palladium. Da die Abgastemperaturen eines Dieselmotors deutlich niedriger sind als die Abgastemperaturen eines Ottomotors, werden Oxidationskatalysatoren für Dieselmotoren (DOC) vorzugsweise in Abgaskrümmernähe verbaut.

Als regenerierbare Partikelfilter können Wandstromfilter und Nebenstromfilter eingesetzt werden. Bei den Wandstromfiltern werden Rußpartikel und andere im Abgasstrom vorhandene Feststoffe an einer porösen Filterwand durch Adhäsion festgesetzt. Erreicht der Abgasgegendruck aufgrund von Partikeleinlagerungen einen vorbestimmten Schwellenwert, wird eine Regeneration des Partikelfilters eingeleitet. Dazu kann beispielsweise eine Nacheinspritzung von Kraftstoff in den Abgasstrom durchgeführt werden, um die Abgastemperatur zu erhöhen und die im Filter eingelagerten Rußpartikel zu verbrennen. Bei der Nebenstromfiltertechnik wird ein Teil des Abgasstroms umgelenkt und durch eine Vliesschicht geleitet. Hierbei werden die Rußpartikel herausgefiltert. Meist erfolgt bei Nebenstromfiltern eine kontinuierliche Regeneration.

Für schwere Fahrzeuge kann die Katalysatoranordnung aus Oxidationskatalysator und Partikelfilter zusätzlich noch mit einem SCR-Katalysator ergänzt werden. Mit SCR (selective catalytic reduction) wird hier die selektive katalytische Reduktion von Stickoxiden (NOx) aus Abgasen von Verbrennungsmotoren bezeichnet. Ein solcher SCR-Katalysator ist beispielsweise in der EP 1 203 611 B1 oder der EP 1 837 494 B1 beschrieben.

Zum Betrieb des SCR-Katalysators wird stromaufwärts des Katalysators ein Reduktionsmittel für die Stickoxide, beispielsweise eine als "AdBlue™" im Handel erhältliche wässrige Harnstoff-Lösung, in den Abgasstrom eingesprüht. Im SCR-Katalysator erfolgt in einem ersten Schritt eine Hydrolyse der Harnstofflösung zu Ammoniak und in einem im zweiten Schritt eine Umsetzung von Ammoniak und NOx zu Wasser und Stickstoff.

Aus der DE 103 23 607 A1, der WO 2005/016497 und der US 2011/0078997 sind jeweils Katalysatoren bekannt, die eine Kombination aus einem SCR-Katalysator und einem Partikelfilter auf einem einzigen Substrat aufweisen. Diese Katalysatoren werden allgemein als SCRF-Katalysatoren (SCR on Filter) bezeichnet und können sowohl Rußpartikel festsetzen als auch Stickoxide NOx zu Stickstoff reduzieren.

Die DE 10 2012 209 852 A1 zeigt eine Katalysatoranordnung, bei der ein SCRF-System um einen SCR-Katalysator stromabwärts erweitert ist, wobei der SCR-Katalysator eine zusätzliche Speicherfunktion für Kohlenwasserstoffe aufweist. Stromabwärts des SCR-Katalysators ist ein Oxidationskatalysator angeordnet, der die Kohlenwasserstoffe und Kohlenmonoxid oxidieren kann.

In der DE 10 2009 038 835 A1 ist eine Abgasreinigungsanlage offenbart, die einen ersten SCR-Katalysator stromaufwärts zu einem Oxidationskatalysator und einem Partikelfilter aufweist und einen weiteren SCR-Katalysator stromabwärts nach dem Partikelfilter.

Aus der DE 10 2011 079 785 ist eine Abgasanlage bekannt, bei der ein erster Oxidationskatalysator (DOC) vorgesehen ist, hinter dem in Strömungsrichtung des Abgases eine SCR-Einrichtung und ein zweiter DOC angeordnet ist. Mit diesem System sollen geringere Kohlenwasserstoffemissionen erreicht werden. Die SCR-Einrichtung kann durch einen nachgeschalteten SCRF-Katalysator ergänzt werden.

Die US 2011/0138776 A1 offenbart eine Abgasbehandlungsanlage für Dieselmotoren, die einen Oxidationskatalysator und einen Dieselpartikelfilter umfasst, wobei ein erster SCR Katalysator am Einlass des Dieselpartikelfilters angeordnet und ein zweiter SCR-Katalysator auf dem Filter abgeschieden ist. Der erste und der zweite SCR-Katalysator weisen jeweils eine niedrige Beladung auf, so dass im Vergleich zu einem SCRF-Katalysator mit hoher Beladung ein niedrigerer Abgasgegendruck erzielt wird.

Die genannten Katalysatoranordnungen sind zur Einhaltung der strenger werdenden Grenzwerte für die Stickoxid- und Kohlenwasserstoffbelastung in Abgasen von Verbrennungsmotoren ausgelegt.

Ein Nachteil der motornah angeordneten SCRF-Katalysatoren besteht allerdings darin, dass das Bauteilvolumen des SCRF-Katalysators im Vergleich zu den bisher eingesetzten, mit Edelmetall beschichteten und auch als "Coated Soot Filter" (CSF) bezeichneten Partikelfiltern vergrößert ist. Auslegungsparameter für den CSF waren in der Vergangenheit das sogenannte "Ascheeinlagerungsvermögen" und der maximale Abgasmassenstrom des Verbrennungsmotors. Für den SCRF-Katalysator ist zusätzlich noch der NOx-Umsatz zu berücksichtigen, was zu einem größeren Bauteilvolumen führt. Das größere Bauteilvolumen des SCRF-Katalysators bedingt aber ein erhöhtes Gewicht, erhöhte Kosten und eine erhöhte thermische Trägheit.

Aufgabe der vorliegenden Erfindung ist es, ein in allen Betriebssituationen zuverlässiges und kostengünstig herstellbares Abgasreinigungssystem bereitzustellen, mit dem die obigen Nachteile vermieden werden können.

Gelöst wird die Aufgabe durch ein Baukastensystem für eine Katalysatorbaugruppe gemäß Anspruch 1.

Vorteilhafte Ausführungsformen der Erfindung sind in den Unteransprüchen angegeben, die wahlweise miteinander kombiniert werden können.

Die Katalysatorbaugruppe umfasst einen regenerierbaren Partikelfilter und einen auf dem Partikelfilter integrierten Katalysator für die selektive Reduktion von Stickoxiden (SCRF-Katalysator). Stromaufwärts des SCRF-Katalysators ist ein Katalysator für die selektive Reduktion von Stickoxiden (SCR-Katalysator) vorgesehen, wobei der SCRF-Katalysator und der SCR-Katalysator in einem gemeinsamen Katalysatorgehäuse angeordnet sind.

Die Katalysatorbaugruppe weist eine Hybridbauweise auf, die einen SCR-Katalysator auf einem eigenen Trägersubstrat und einen nachgeschalteten SCRF-Katalysator mit einem Bauteilvolumen umfasst, das dem Volumen eines für die jeweilige Variante des Verbrennungsmotors üblichen CSF entspricht. Diese Hybridbauweise hat den Vorteil, dass ein Baukastensystem für unterschiedliche Fahrzeuge bereitgestellt werden kann, bei dem je nach Fahrzeuggröße oder Motorvariante die SCRF-Katalysatoren gleich dimensioniert und die Dimensionen der SCR-Katalysatoren variiert werden. Die Herstellung der Katalysatorbaugruppe kann daher zu geringeren Kosten erfolgen.

Weitere Vorteile der Katalysatorbaugruppe ergeben sich daraus, dass der SCR-Katalysator aufgrund seiner geringeren thermischen Trägheit ein schnelleres Anspringverhalten der SCR-Funktion im Normalbetrieb und einen besseren NOx-Umsatz im Emissionszyklus zeigt. Daraus folgt ein verbesserter Wirkungsgrad der Katalysatorbaugruppe bei gleichem Gesamtvolumen. Durch das kleinere Volumen des Partikelfilters ergibt sich außerdem ein geringeres Gesamtgewicht. Außerdem sind die Kosten des Hybridsystems geringer, da der SCR-Katalysator günstiger hergestellt werden kann als ein Partikelfilter. Im Regenerationsbetrieb des Partikelfilters kann das Aufheizen der Baugruppe wegen der geringeren Wärmekapazität des SCR-Filters schneller erfolgen.

Gemäß einer bevorzugten Ausführungsform umfasst der SCR-Katalysator ein metallisches oder keramisches Durchfluss-Substrat. Das Durchfluss-Substrat ist typischerweise ein Wabenmonolith mit einer Abfolge von länglichen Kanälen, die sich durch diesen hindurch erstrecken, wobei die Kanäle an beiden Enden offen sind. Ein solches Durchfluss-Substrat lässt sich zu geringen Kosten mit verschiedenen axialen Ausdehnungen herstellen. Auf diese Weise kann der NOx-Umsatz des SCR-Katalysators leicht an verschiedene Motorvarianten angepasst werden. Die Unterschiede in den verschiedenen axialen Ausdehnungen sind dabei größer als die bei der Herstellung von Substratmonolithen für Katalysatoren üblicherweise auftretenden Fertigungstoleranzen.

Der SCRF-Katalysator ist vorzugsweise als ein filternder Monolith gebildet, besonders bevorzugt als ein Wandstromfilter, beispielsweise in Form eines keramischen porösen Filtersubstrats, das eine Vielzahl von Einlasskanälen, die parallel zueinander angeordnet sind, und eine Vielzahl von Auslasskanälen umfasst, wobei jeder Einlasskanal und jeder Auslasskanal teilweise durch eine keramische Wand einer porösen Struktur definiert ist. Jeder Einlasskanal ist dabei abwechselnd von einem Auslasskanal durch eine keramische Wand einer porösen Struktur getrennt und umgekehrt. Mit anderen Worten ist der Wandstromfilter eine Wabenanordnung, die eine Vielzahl von am stromaufseitigen Ende verschlossenen ersten Kanälen und eine Vielzahl von zweiten Kanälen definiert, die am stromaufseitigen Ende nicht verschlossen, jedoch am stromabseitigen Ende verschlossen sind. Kanäle, die vertikal und lateral zu einem ersten Kanal benachbart sind, sind am stromabseitigen Ende verschlossen. Bei Betrachtung von einem der Enden besitzen die wechselweise verschlossenen und offenen Enden der Kanäle das Aussehen eines Schachbretts.

Der SCRF-Katalysator kann als Vollextrudat oder als beschichtetes Trägersubstrat ausgebildet sein. Geeignete katalytisch aktive Substanzen umfassen Mischoxide von Vanadium und Titan, eisen- und kupferhaltige Zeolithe sowie Mischungen davon.

Das Durchfluss-Substrat des SCR-Katalysators ist vorzugsweise ein scheibenförmiger Wabenmonolith, insbesondere mit einem im Wesentlichen zylindrischen oder polygonalen, bevorzugt rechteckigen Querschnitt. Die Geometrie des Durchfluss-Substrats ist vorzugsweise an die Außenabmessungen des SCRF-Katalysators angepasst.

Als katalytisch aktive Komponente für den SCR-Katalysator können die üblichen im Stand der Technik bekannten Beschichtungen und Vollextrudate verwendet werden. Als Katalysatoren für die selektive Reduktion von Stickoxiden eignen sich beispielsweise kupferhaltige Verbindungen, Mischoxide und Oxidgemische von Vanadiumoxid und Titandioxid sowie wahlweise Wolframoxid, Molybdänoxid und Siliciumdioxid, eisen- und kupferhaltige Zeolithe sowie saure Zeolithe, die teilweise mit Metallionen ausgetauscht sein können, und Mischungen davon.

Besonders bevorzugt ist wenigstens ein Abstandselement zwischen dem SCR-Katalysator und dem SCRF-Katalysator öder einer axialen Wandfläche des Katalysatorgehäuses vorgesehen. Mit den Abstandselementen lassen sich die unterschiedlichen axialen Ausdehnungen des SCR-Katalysators bei gleichbleibendem Volumen des Katalysatorgehäuses und des SRCF-Katalysators ausgleichen. Als Abstandselemente können feste Abstandhalter und/oder Vliesstoffe, Gestricke und Gewebe dienen, die üblicherweise auch zum Ausgleich von Fertigungstoleranzen der Katalysatorsubstrate eingesetzt werden. Bevorzugt sind warmfeste Drahtgestricke.

Das erfindungsgemäße Baukastensystem dient zur Verwendung für mehrere Varianten eines Verbrennungsmotors, insbesondere eines Dieselmotors, und umfasst mehrere Katalysatorgehäuse und SCRF-Katalysatoren, die für die mehreren Varianten des Verbrennungsmotors unabhängig von der Motorvariante jeweils gleich dimensioniert sind, sowie einen Satz von mehreren verschiedenen SCR-Katalysatoren, die für die mehreren Varianten des Verbrennungsmotors jeweils in Abhängigkeit von der Motorvariante dimensioniert sind und unterschiedliche Außenabmessungen aufweisen.

Vorzugsweise weisen die SCRF-Katalysatoren und die Katalysatorgehäuse des Baukastensystems jeweils gleiche Außenabmessungen auf, die zur Verwendung mit mehreren Motorvarianten geeignet sind. Vorzugsweise können die Katalysatorgehäuse und die SCRF-Katalysatoren in dem Baukasten jeweils ein gleiches Volumen und/oder ein gleiches Verhältnis von Länge zu Querschnitt aufweisen.

Gleiche Außenabmessungen bzw. ein gleiches Volumen oder ein gleiches Verhältnis von Länge zu Querschnitt bedeuten hier, dass die Abmessungen der SCRF-Katalysatoren und/oder der Katalysatorgehäuse im Baukasten nur innerhalb der üblichen Fertigungstoleranzen schwanken. Die Anpassung an mehrere Motorvarianten erfolgt durch Optimierung und Festlegung der Abmessungen bzw. Dimensionierung des Katalysatorgehäuses und des SCRF-Katalysators, sodass für alle Motorvarianten des Baukastens ohne zusätzlichen SCR-Katalysator eine ausreichende Schadstoffminderung unter Einhaltung vorbestimmter Grenzwerte erreicht wird.

Die Abmessungen der mehreren SCR-Katalysatoren im Baukastensystem sind vorzugsweise so gewählt, dass der jeweilige SCR-Katalysator eine an die zugehörige Motorvariante und wahlweise die Abmessungen des SCRF-Katalysators angepasste axiale Ausdehnung aufweist. Durch die Auswahl des SCR-Katalysators mit der für die jeweilige Motorvariante passenden axialen Ausdehnung lassen sich dann insbesondere die Stickoxide im Abgasstrom auf Werte unterhalb der gesetzlichen Grenzwerte senken.

Zusätzlich kann das Baukastensystem einen Satz von verschiedenen Abstandselementen umfassen, die an die Dimensionierung der mehreren SCR-Katalysatoren angepasst sind. Da je nach Motorvariante unterschiedlich dimensionierte SCR-Katalysatoren verwendet werden, lassen sich so die gegebenenfalls im Katalysatorgehäuse entstehenden Leerräume ausgleichen. Die Abstandselemente können feste Abstandshalter wie Abstandsringe sein, oder es können die auch zum Ausgleich von Fertigungstoleranzen eingesetzten warmfesten Drahtgestricke mit unterschiedlichen Wandstärken verwendet werden.

Die Katalysatrobaugruppe kann in einer Vorrichtung zur Reinigung von Abgasen eines Verbrennungsmotors verwendet werden.

Insbesondere kann die Vorrichtung eine Einrichtung zur Zufuhr eines Reduktionsmittels enthalten, insbesondere von Ammoniak oder einer Ammoniakvorstufe, die stromaufwärts zur Katalysatorbaugruppe angeordnet ist. Das Reduktionsmittel ist vorzugsweise eine als "AdBlue™" im Handel erhältliche Harnstofflösung, deren Zusammensetzung international standardisiert ist. Stromabwärts der Einrichtung zur Zufuhr des Reduktionsmittels und vor der Katalysatorbaugruppe kann ein Mischelement bzw. ein Verdampfer vorgesehen sein, das bzw. der eine gleichmäßige Verteilung des Reduktionsmittels im Abgasstrom bewirkt.

Des Weiteren kann die Vorrichtung einen bekannten Oxidationskatalysator und/oder einen NOx-Speicherkatalysator umfassen, die jeweils im Abgasstrang stromaufwärts zur Baugruppe und der Einrichtung zur Zufuhr eines Reduktionsmittels angeordnet sind.

Als weitere bevorzugte Ausführungsform kann die Vorrichtung einen der Baugruppe aus SCR-Katalysator und SCRF-Katalysator nachgeschalteten Ammoniak-Sperrkatalysator enthalten, der stromabwärts zur Baugruppe angeordnet ist. Der Ammoniak-Sperrkatalysator verhindert die durch den sogenannten Ammoniak-Schlupf auftretenden Geruchsbelästigungen, die durch eine Überdosierung des Reduktionsmittels entstehen können.

Das erfindungsgemäße Verfahren zur Herstellung der Katalysatorbaugruppe aus einem Baukastensystem für mehrere Varianten eines Verbrennungsmotors, insbesondere eines Dieselmotors, umfasst die folgenden Schritte:

a) Bereitstellen von mehreren Katalysatorgehäusen und mehreren SCRF-Katalysatoren mit jeweils gleichen Abmessungen;

b) Auswählen eines in Abhängigkeit von der jeweiligen Motorvariante dimensionierten SCR-Katalysators aus einem Satz von verschiedenen SCR-Katalysatoren; und

c) Zusammenbauen des ausgewählten SCR-Katalysators mit dem SCRF-Katalysator in dem Katalysatorgehäuse zur Bildung der Katalysatorbaugruppe.

Mit dem erfindungsgemäßen Verfahren kann eine modulartige Bauweise der Katalysatorbaugruppe realisiert werden. Da lediglich der kostengünstige SCR-Katalysator variiert wird, können sowohl die Lagerhaltungskosten als auch die Herstellkosten der Baugruppe insgesamt gesenkt werden.

Gemäß einer weiteren Ausführungsform des Verfahrens enthält der Baukasten zusätzlich einen Satz von unterschiedlich dimensionierten Ausgleichselementen, wobei wenigstens ein Ausgleichselement für die jeweilige Motorvariante in Abhängigkeit von der Dimensionierung des SCR-Katalysators aus dem Satz von Ausgleichselementen ausgewählt und in dem Katalysatorgehäuse verbaut wird.

Weitere Vorteile der Erfindung ergeben sich aus der nachfolgenden Beschreibung einer bevorzugten Ausführungsform mit Bezug auf die beigefügte Zeichnung.

In der Zeichnung zeigt die einzige Figur eine schematische Darstellung einer Vorrichtung zur Reinigung von Abgasen eines Verbrennungsmotors mit der erfindungsgemäßen Katalysatorbaugruppe.

Die in der Figur schematisch dargestellte Vorrichtung 10 dient insbesondere zur Reinigung der Abgase 12 eines Dieselmotors (nicht gezeigt) und umfasst in Strömungsrichtung der Abgase:

- einen bekannten Abgasturbolader 14;

- einen bekannten Oxidationskatalysator 16, wobei der Oxidationskatalysator durch einen NOx-Speicherkatalysator ersetzt oder mit einem NOx-Speicherkatalysator kombiniert sein kann;

- eine bekannte Vorrichtung 18 zur Zufuhr eines Reduktionsmittels für Stickoxide, beispielsweise eine Einspritzvorrichtung für eine Harnstofflösung mit einen nachgeschalteten Mischelement (nicht gezeigt);

- die Katalysatorbaugruppe 20; und

- einen bekannten Ammoniak-Sperrkatalysator 22, von dem aus die gereinigten Abgase in die Umwelt abgegeben werden können. Anstelle des Ammoniak-Sperrkatalysators oder zusätzlich dazu können ein weiterer SCR-Katalysator, ein Oxidationskatalysator oder eine Kombination aus SCR-Katalysator und Oxidationskatalysator vorgesehen sein, wie dies im Stand der Technik bekannt ist.

Die Katalysatorbaugruppe umfasst einen SCR-Katalysator 24 und einen dem SCR-Katalysator nachgeschalteten, stromabwärts angeordneten SCRF-Katalysator 26.

Der SCR-Katalysator 24 dient zur selektiven Reduktion von Stickoxiden und ist vorzugsweise als Durchfluss-Substrat ohne Filterfunktion ausgebildet, insbesondere als scheibenförmiger Wabenmonolith.

Der SCRF-Katalysator 26 ist aus einem regenerierbaren Partikelfilter und einem auf dem Partikelfilter integrierten Katalysator für die selektive Reduktion von Stickoxiden aufgebaut.

Der SCR-Katalysator 24 und der SCRF-Katalysator 26 sind in einem gemeinsamen Katalysatorgehäuse 28 angeordnet.

Erfindungsgemäß wird die Katalysatorbaugruppe 20 aus einem Baukastensystem zusammengestellt. Das Baukastensystem ermöglicht eine modulare Bauweise der Katalysatorbaugruppe 20, die für mehrere Varianten eines Verbrennungsmotors, insbesondere eines Dieselmotors, verwendet werden kann.

Der Baukasten umfasst mehrere Katalysatorgehäuse 28 und mehrere SCRF-Katalysatoren 26, die für mehrere Varianten des Verbrennungsmotors jeweils unabhängig von der Motorvariante dimensioniert sind, d.h. die gleichen Außenabmessungen aufweisen. Im Rahmen der üblichen Fertigungstoleranzen liegende Abweichungen werden hier als gleiche Abmessungen angesehen.

Darüber hinaus umfasst der Baukasten einen Satz von verschiedenen SCR-Katalysatoren 24, die für die mehreren Varianten des Verbrennungsmotors jeweils in Abhängigkeit von der Motorvariante dimensioniert sind.

Vorzugsweise können die Katalysatorgehäuse 28 und die SCRF-Katalysatoren 26 in dem Baukasten ein gleiches Volumen und/oder ein gleiches Verhältnis von Länge zu Querschnitt aufweisen.

Die Abmessungen der verschiedenen SCR-Katalysatoren im Baukastensystem sind vorzugsweise so gewählt, dass der jeweilige SCR-Katalysator eine an die zugehörige Motorvariante angepasste axiale Ausdehnung und wahlweise eine an die Außenabmessungen des SCRF-Katalysators angepasste Geometrie aufweist.

Zusätzlich kann das Baukastensystem einen Satz von mehreren verschiedenen Abstandselementen (nicht gezeigt) umfassen, die an die Dimensionierung der verschiedenen SCR-Katalysatoren angepasst sind. Die Abstandselemente dienen zum Ausgleichen der gegebenenfalls im Katalysatorgehäuse entstehenden Leerräume, die aufgrund der Verwendung von SCR-Katalysatoren 24 mit unterschiedlichen Abmessungen entstehen können. Als Abstandselemente können feste Abstandshalter wie Abstandsringe oder die auch zum Ausgleich von Fertigungstoleranzen eingesetzten warmfesten Drahtgestricke mit unterschiedlichen Wandstärken verwendet werden.

Zur Herstellung der erfindungsgemäßen Katalysatorbaugruppe 20 aus dem Baukastensystem werden zunächst ein Katalysatorgehäuse 28 und ein SCRF-Katalysator mit vorbestimmten, an die mehreren Motorvarianten angepassten Abmessungen bereitgestellt. Anschließend wird in Abhängigkeit von der jeweiligen Motorvariante ein geeignet dimensionierter SCR-Katalysator 24 aus einem Satz von SCR-Katalysatoren mit unterschiedlichen Abmessungen bzw. axialen Ausdehnungen ausgewählt. Das Katalysatorgehäuse 28, der SCRF-Katalysator 26 und der aus dem Baukasten ausgewählte SCR-Katalysator 24 werden dann, wahlweise zusammen mit ebenfalls aus dem Baukasten ausgewählten Abstandselementen, zu der Katalysatorbaugruppe 20 verbaut.

Als Beispiel für die Dimensionierung der Katalysatorbaugruppe 20 kann der Vergleich mit einem herkömmlichen Dieselpartikelfilter (CSF) für einen Dieselmotor mit 2,0 dm$^3$ Hubraum dienen:

$$\text{CSF-Volumen} = 2,8 \text{ dm}^3$$

Unter Beibehaltung des optimalen Verhältnisses von Länge zu Querschnitt des CSF ergibt sich daraus für einen SCRF-Katalysator ein Volumen von 3,5 dm$^3$.

Das Hybridsystem der aus einem SCR-Katalysator 24 und einem SCRF-Katalysator 26 zusammengesetzten Katalysatorbaugruppe 20 kann demnach das folgende Volumen aufweisen:

$$\text{Volumen Hybridsystem} = \text{SCR-Volumen} + \text{SCRF-Volumen}$$

$$= 0,7 \text{ dm}^3 + 2,8 \text{ dm}^3 = 3,5 \text{ dm}^3$$

Zur Verwendung mit einer anderen Motorvariante wird das SCRF-Volumen beibehalten und nur das SCR-Volumen bzw. die axiale Ausdehnung des SCR-Durchfluss-Substrats variiert. Mit dem erfindungsgemäßen Baukastensystem kann somit eine kostengünstige modulartige Bauweise der Katalysatorbaugruppe realisiert werden. Gleichzeitig ergeben sich auch technische Vorteile, da das SCR-Durchfluss-Substrat eine geringere Wärmekapazität aufweist und ein besseres thermisches Anspringverhalten zeigt. Bei gleichem Gesamtvolumen kann außerdem der Wirkungsgrad der Katalysatorbaugruppe verbessert werden, da der NOx-Umsatz des SCR-Katalysators größer ist.

**Patentansprüche**

1. Baukastensystem für eine Katalysatorbaugruppe (20), die für eine Vorrichtung (10) zur Reinigung von Abgasen eines Verbrennungsmotors vorgesehen ist, insbesondere eines Dieselmotors, wobei die Katalysatorbaugruppe einen regenerierbaren Partikelfilter und einen auf dem Partikelfilter integrierten Katalysator für die selektive Reduktion von Stickoxiden (SCRF-Katalysator) (26) umfasst, wobei stromaufwärts des SCRF-Katalysators (26) ein Katalysator für die selektive Reduktion von Stickoxiden (SCR-Katalysator) (24) vorgesehen ist und der SCRF-Katalysator (26) und der SCR-Katalysator (24) in einem gemeinsamen Katalysatorgehäuse (28) angeordnet sind, **dadurch gekennzeichnet, dass** das Baukastensystem zur Verwendung für mehrere Varianten eines Verbrennungsmotors vorgesehen ist, insbesondere eines Dieselmotors, wobei das Baukastensystem mehrere Katalysatorgehäuse (28) und SCRF-Katalysatoren (26) umfasst, die für die mehreren Varianten des Verbrennungsmotors unabhängig von der Motorvariante jeweils gleich dimensioniert sind, und einen Satz von verschiedenen SCR-Katalysatoren (24) umfasst, die für die mehreren Varianten des Verbrennungsmotors jeweils in Abhängigkeit von der Motorvariante dimensioniert sind und unterschiedliche Außenabmessungen aufweisen.

2. Baukastensystem nach Anspruch 1, **dadurch gekennzeichnet, dass** der SCR-Katalysator (24) ein metallisches oder keramisches Durchfluss-Substrat umfasst.

3. Baukastensystem nach Anspruch 2, **dadurch gekennzeichnet, dass** das Durchfluss-Substrat ein scheibenförmiger Wabenmonolith ist.

4. Baukastensystem nach einem der vorhergehenden Ansprüche, **dadurch gekennzeichnet, dass** wenigstens ein Abstandselement zwischen dem SCR-Katalysator (24) und dem SCRF-Katalysator (26) oder einer axialen Wandfläche des Katalysatorgehäuses (28) vorgesehen ist.

5. Baukastensystem nach einem der vorhergehenden Ansprüche, **dadurch gekennzeichnet, dass** die SCRF-Katalysatoren (26) des Baukastensystems ein gleiches Verhältnis von Länge zu Querschnitt aufweisen.

6. Baukastensystem nach einem der vorhergehenden Ansprüche, **dadurch gekennzeichnet, dass** die SCRF-Katalysatoren (26) des Baukastensystems gleiche Außenabmessungen aufweisen.

7. Baukastensystem nach einem der vorhergehenden Ansprüche, **dadurch gekennzeichnet, dass** die verschiedenen SCR-Katalysatoren (24) eine unterschiedliche, an die jeweilige Motorvariante angepasste axiale Ausdehnung aufweisen.

8. Baukastensystem nach einem der vorhergehenden Ansprüche, das ferner einen Satz von verschiedenen Abstandselementen umfasst, die an die Dimensionierung der mehreren SCR-Katalysatoren (24) angepasst sind.

9. Verfahren zur Herstellung einer Katalysatorbaugruppe (20) aus einem Baukastensystem gemäß einem der Ansprüche 1 bis 8 zur Verwendung für mehrere Motorvarianten eines Verbrennungsmotors, insbesondere eines Dieselmotors, welches die folgenden Schritte umfasst:

Bereitstellen von mehreren Katalysatorgehäusen (28) und SCRF-Katalysatoren (26) mit jeweils gleichen Abmessungen;
Auswählen eines in Abhängigkeit von der jeweiligen Motorvariante dimensionierten SCR-Katalysators (24) aus einem Satz von verschiedenen SCR-Katalysatoren; und
Zusammenbauen des ausgewählten SCR-Katalysators (24) mit dem SCRF-Katalysator (26) in dem Katalysatorgehäuse (28) zur Bildung der Katalysatorbaugruppe (20).

10. Verfahren nach Anspruch 9, **dadurch gekennzeichnet, dass** ein Ausgleichselement in Abhängigkeit von der Dimensionierung des SCR-Katalysators (24) aus einem Satz von verschiedenen Ausgleichselementen ausgewählt und in dem Katalysatorgehäuse (28) verbaut wird.

**Claims**

1. A modular system for a catalyst subassembly (20) which is provided for a device (10) for purifying exhaust from an internal combustion engine, especially a diesel engine, wherein the catalyst subassembly comprises a regeneratable particulate filter and a catalyst integrated on the particulate filter for the selective reduction of nitrogen oxides (SCRF catalyst) (26), wherein a catalyst for the selective reduction of nitrogen oxides (SCR catalyst) (24) is provided upstream from the SCRF catalyst (26), and the SCRF catalyst (26) and the SCR catalyst (24) are arranged in a common catalyst housing (28), **characterised in that** the modular system is provided for use for a plurality of variants of an internal combustion engine, especially a diesel engine, the modular system comprising a plurality of catalyst housings (28) and SCRF catalysts (26) which are of identical dimensions in each case for the plurality of variants of the internal combustion engine independently of the engine variant, and comprising a set of different SCR catalysts (24), which are dimensioned in each case dependent on the engine variant for the plurality of variants of the internal combustion engine and have different external dimensions.

2. A modular system according to Claim 1, **characterised in that** the SCR catalyst (24) comprises a metallic or ceramic throughflow substrate.

3. A modular system according to Claim 2, **characterised in that** the throughflow substrate is a disc-shaped honeycomb monolith.

4. A modular system according to one of the preceding claims, **characterised in that** at least one spacer element is provided between the SCR catalyst (24) and the SCRF catalyst (26) or an axial wall surface of the catalyst housing (28).

5. A modular system according to one of the preceding claims, **characterised in that** the SCRF catalysts (26) of the modular system have an identical ratio of length to cross-section.

6. A modular system according to one of the preceding claims, **characterised in that** the SCRF catalysts (26) of the modular system have identical external dimensions.

7. A modular system according to one of the preceding claims, **characterised in that** the various SCR catalysts (24) have a different axial extent which is adapted to the respective engine variant.

8. A modular system according to one of the preceding claims, which further comprises a set of different spacer elements which are adapted to the dimensions of the plurality of SCR catalysts (24).

9. A method for producing a catalyst subassembly (20) from a modular system according to one of Claims 1 to 8 for use for a plurality of engine variants of an internal combustion engine, especially a diesel engine, which comprises the following steps:

   providing a plurality of catalyst housings (28) and SCRF catalysts (26) with identical dimensions in each case;
   selecting an SCR catalyst (24) dimensioned dependent on the respective engine variant from a set of different SCR catalysts; and
   assembling the selected SCR catalyst (24) with the SCRF catalyst (26) in the catalyst housing (28) to form the catalyst subassembly (20).

10. A method according to Claim 9, **characterised in that** a compensation element is selected from a set of different compensation elements dependent on the dimensions of the SCR catalyst (24) and is installed in the catalyst housing (28).

**Revendications**

1. Système modulaire destiné à un ensemble catalyseur (20) d'un dispositif (10) d'épuration des gaz d'échappement d'un moteur à combustion interne, en particulier d'un moteur diesel, l'ensemble catalyseur comportant un filtre à particules pouvant être régénéré et un catalyseur de réduction sélective des oxydes d'azote (catalyseur-SCRF) (26) intégré au filtre à particules, en amont du catalyseur-SCRF (26) étant prévu un catalyseur de réduction sélective des oxydes d'azote (catalyseur-SCR) (24), et le catalyseur-SCRF (26) et le catalyseur-SCR (24) étant situés dans un boîtier de catalyseur commun (28),
   **caractérisé en ce que**
   le système modulaire est prévu pour être utilisé pour différentes variantes d'un moteur à combustion interne, en particulier d'un moteur diesel, le système modulaire comprenant plusieurs boîtiers de catalyseur (28) et plusieurs catalyseurs-SCRF (26) qui sont respectivement dimensionnés de manière similaire pour les variantes du moteur à combustion interne, indépendamment de ces variantes ainsi qu'un jeu de différents catalyseurs-SCR (24) qui sont dimensionnés pour les différentes variantes du moteur à combustion interne respectivement en fonction de ces variantes et présentent des dimensions externes différentes.

2. Système modulaire conforme à la revendication 1,
   **caractérisé en ce que**
   le catalyseur-SCR (24) comporte un substrat de passage métallique ou céramique.

3. Système modulaire conforme à la revendication 2,
   **caractérisé en ce que**
   le substrat de passage est un élément monolithique en nid d'abeilles en forme de disque.

4. Système modulaire conforme à l'une des revendications précédentes,
   **caractérisé en ce qu'**
   il est prévu au moins un élément d'écartement entre le catalyseur-SCR (24) et le catalyseur-SCRF (26), ou une surface de parois axiale du boîtier de catalyseur (28).

5. Système modulaire conforme à l'une des revendications précédentes,
   **caractérisé en ce que**
   les catalyseurs-SCRF (26) du système modulaire ont un même rapport de la longueur à la section.

6. Système modulaire conforme à l'une des revendications précédentes,
   **caractérisé en ce que**
   les catalyseurs-SCRF (26) du système modulaire ont les mêmes dimensions extérieures.

7. Système modulaire conforme à l'une des revendications précédentes,
   **caractérisé en ce que**
   les différents catalyseurs-SCR (24) ont des extensions axiales différentes adaptées aux variantes de moteur respectives.

8. Système modulaire conforme à l'une des revendications précédentes, comportant en outre un jeu de différents éléments d'écartement qui sont adaptés aux dimensions des catalyseurs-SCR (24).

9. Procédé de fabrication d'un ensemble catalyseur (20) à partir d'un système modulaire conforme à l'une des revendications 1 à 8, destiné à être utilisé pour plusieurs variantes d'un moteur à combustion interne, en particulier d'un moteur diesel comportant les étapes suivantes, consistant à :

se procurer plusieurs boîtiers de catalyseur (28) et plusieurs catalyseurs-SCRF (26) ayant respectivement les mêmes dimensions,
sélectionner un catalyseur-SCR (24) dimensionné en fonction des variantes de moteur, respectives parmi un jeu de différents catalyseurs-SCR, et
assembler le catalyseur-SCR (24) sélectionné avec le catalyseur-SCRF (26) dans le boîtier de catalyseur (28) pour former l'ensemble catalyseur (20).

10. Procédé conforme à la revendication 9,
**caractérisé en ce qu'**
un élément de compensation est choisi en fonction des dimensions du catalyseur-SCR (24) parmi un jeu de différents éléments de compensation, et est inséré dans le boîtier de catalyseur (28).

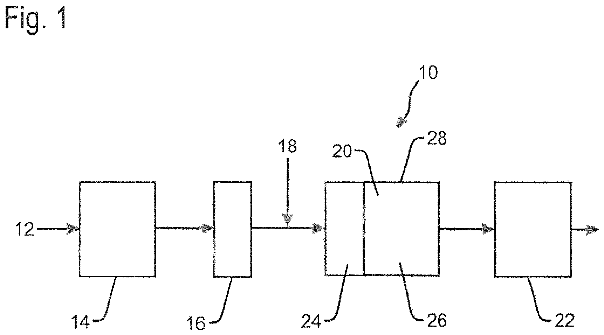

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1203611 B1
- EP 1837494 B1
- DE 10323607 A1
- WO 2005016497 A
- US 20110078997 A
- DE 102012209852 A1
- DE 102009038835 A1
- DE 102011079785
- US 20110138776 A1